# EUROPEAN PATENT APPLICATION

(11) **EP 2 355 278 A2**
(43) Date of publication of application: **10.08.2011**
(21) Application number: 09825835.3
(22) Date of filing: 13.11.2009
(51) Int. Cl.: H02G 3/04

(54) **PROTECTIVE TUBE AND RELATED MANUFACTURING METHOD**

(30) Priority: 13.11.2008 EP 08382064
(71) Applicant: Relats, S.A., 08140 Caldes De Montbui (Barcelona) (ES)
(72) Inventor: RELATS CASAS, Pere, E-08140 Caldes De Montbui (ES); RELATS MANENT, Jordi, E-08140 Caldes De Montbui (ES); FRUNS MARTÍN, Anna, E-08140 Caldes De Montbui (ES); MARTINEZ, Josep Ramon, E-08140 Caldes De Montbui (ES); ARTOLA SOLÉ, Dolors, E-08140 Caldes De Montbui (ES)
(74) Representative: Ponti Sales, Adelaida
(86) International application number: PCT/IB2009/055053
(87) International publication number: WO 2010/055486

(57) **Abstract**

The protective sleeve comprises a plurality of yarns and/or cords knitted to each other, and it is **characterised in that** said cords are formed by textile structures knitted to each other and cover in a substantially complete way the external surface of said sleeve.

The method for manufacturing the protective sleeve is **characterised in that** it comprises the following steps: knitting a plurality of yarns to form a plurality of cords; and braiding said plurality of cord to form said sleeve.

It is obtained a protective sleeve that provides a great resistance to impacts, protecting completely the cables housed inside it.

## Description

The present invention refers to a protective sleeve, specially designed for protecting cables in automobiles. The present invention also refers to a method for manufacturing said protective sleeve.

### BACKGROUND OF THE INVENTION

In the automobile industry the automobile cables are covered with textile protective sleeves. These protective sleeve must have thermal and mechanical protective features.

Usually, these protective sleeves are formed from a plurality of yarns knitted to each other with different materials and features, according to their particular application. Furthermore, if necessary, these protective sleeves can be covered with any material that provides any enhancement to their features.

However, in the practice it has been shown that in case of an impact on the automobile, the protective sleeves currently known cannot protect completely the cables housed inside them.

It must be pointed out that protective sleeves are known that comprise braids formed by yarns, see e.g. EP-A-1 119 656 and US-5.744.206. However, the braids included in these protective sleeves only cover a limited portion of the sleeve surface, because their end is not to protect mechanically the cables that are housed inside it, but to provide a space between the internal surface of the sleeve and the cables inside it. Therefore, these known sleeves are suitable to provide thermal protection, thanks to the air chamber defined inside the sleeve by said braids or cords.

### DESCRIPTION OF THE INVENTION

With the protective sleeve and the method of the invention said drawbacks can be solved, presenting other advantages that will be described.

According to a first aspect, the present invention refers to a protective sleeve comprising a plurality of yarns and/or cords knitted to each other, that is characterised in that said cords are formed by textile structures that are bound to each other and cover in a substantially complete way the external surface of said sleeve.

Advantageously, the yarns of said cords are from polymeric material, aramid, metal, polyethereherketone (PEEK), glass fibres and/or silica derivates, or any material that can be knitted.

The yarns of said cords can be straight or textured multi-filaments twisted or non-twisted and/or mono-filaments, which have a circular, oval or rectangular cross-section, or with any other suitable shape.

Preferably, the linear density of the yarns of said cords is from 10 dTex to 10,000 dTex.

The cords preferably has a round, square or rectangular cross-section, with a thickness from 0.5 mm to 35 mm.

Regarding the sleeve, its diameter is from 1 mm to 500 mm, and the thickness of the sleeve wall is from 0.5 mm to 50 mm. If wished, said sleeve can be finished with silicone, polyurethane, resin, acrylics, or any suitable finish.

According to a second aspect, the present invention refers to a method for manufacturing the protective sleeve previously cited, that is characterised in that comprises the following steps:
- knitting a plurality of yarns to form a plurality of cords;
- braiding said plurality of cord to form said sleeve.

Said knitting of said yarns to form the cords can be done by twisting, folding, braiding, knitbraiding, warp knitting, weft circular knitting, flat bed knitting, weaving and/or non-woven fabrics.

On the other hand, the braiding of said plurality of cords to form said sleeve is done by braiding inserting the cord as a straight yarn, braided braiding the cord, warpknitting inserting the cord on Raschel machines, knitting or laying the cord, knitting in narrow fabric machines wefting the cord or inserting the cord or both at the same time, and/or flat bed knitting inserting the cord, knitting or laying the cord.

It must be pointed out that the sleeve can be done integrally from cords braided to each other, or mixing cords and textile material.

The method can comprise, if whished, an additional step of finishing with silicone, polyurethane, resin, acrylics or any suitable finish.

The protective sleeve has the main advantage that provides a great resistance to impacts, protecting completely the cables housed inside it. E.g. in case of an impact in an automobile, the protective sleeve of the present invention resists absorbing said impact and it does not affect the cables housed inside it.

### DESCRIPTION OF PREFERRED EMBODIMENTS

### Example 1: Braided sleeve braiding the cord as straight yarn

### - Embodiment of the cord:

- Number of needles: 4
- Number of yarns: 4
- Density: 12 stitches in 3 cm.
- Kind of yarn: multi-filament of polyester (PES) 1100 dtex
- Kind of structure: movement on 3 needles

The sleeve that is obtained has the following features:
- Diameter or thickness: 2 mm

### - Embodiment of the sleeve:

- Number of reels: 56
- Yarns per reel: 2
- Number of reels of straight yarn: 28
- Yarns per reel of straight yarn: knitbraided cord with polyester multi-filament (PES) 1100 dtex
- Density: 24 stitches in 3 cm.
- Kind of yarn: polyester multi-filament (PES) 11000 dtex

The sleeve that is obtained has the following features:
- Wall thickness: 3 mm
- Internal diameter: 16 mm

### Example 2: Knitbraided sleeve knitting with the cord

### - Embodiment of the cord

- Number of needles: 4
- Number of yarns: 4
- Density: 12 stitches in 3 cm.
- Kind of yarn: Polyester multi-filament (PES) 2200 dtex
- Kind of structure: movement on 2 needles

The sleeve that is obtained has the following features:
- Diameter or thickness: 3 mm

### - Embodiment of the sleeve:

- Number of the needles: 12
- Number of yarns (cords): 12
- Density: 3 stitches in 3 cm
- Kind of yarn: knitbraided cord with polyester multi-filament (PES) 2200 dtex
- Kind of structure: movement on 3 needles

The sleeve that is obtained has the following features:
- Wall thickness: 9 mm
- Internal diameter: 16 mm

Even though reference is made to a specific embodiment of the invention, it is apparent for a person skilled in the art that the described protective sleeve and the method are susceptible of numerous variations and modifications, and that all the details cited can be substituted by other technically equivalent ones, without departing from the scope of protection defined by the attached claims.

## Claims

1. Protective sleeve comprising a plurality of yarns and/or cords knitted to each other, **characterised in that** said cords are formed by textile structures knitted to each other and cover in a substantially complete way the external surface of said sleeve.

2. Protective sleeve according to claim 1, wherein the yarns of said cords are made from polymeric material, aramid, metal, polyethereherketone (PEEK), glass fibres and/or silica derivates.

3. Protective sleeve according to claim 1 or 2, wherein the yarns of said cords are straight or textured multi-filaments twisted or non-twisted and/or mono-filaments.

4. Protective sleeve according to claim 3, wherein said mono-filaments have a circular, oval ο rectangular cross-section.

5. Protective sleeve according to anyone of the previous claims, wherein the linear density of the yarns of said cords is from 10 dTex and 10,000 dTex.

6. Protective sleeve according to claim 1, wherein the cords have a round, square or rectangular cross-section.

7. Protective sleeve according to claim 1 or 6, wherein the thickness of the cords is from 0.5 mm and 35 mm.

8. Protective sleeve according to claim 1, wherein the diameter of the sleeve is from 1 mm and 500 mm.

9. Protective sleeve according to claim 1 or 8, wherein the thickness of the wall of the sleeve is from 0.5 mm and 50 mm.

10. Protective sleeve according to claim 1, wherein said sleeve is finished with silicone, polyurethane, resin or acrylics.

11. Method for manufacturing the protective sleeve according to anyone of claims 1-10, **characterised in that** it comprises the following steps:
- knitting a plurality of yarns to form a plurality of cords;
- braiding said plurality of cord to form said sleeve.

12. Method according to claim 11, wherein said knitting of said yarns to form the cords can be done by twisting, folding, braiding, knitbraiding, warp knitting, weft circular knitting, flat bed knitting, weaving and/or non-woven fabrics.

13. Method according to claim 11, wherein braiding of said plurality of cords to form said sleeve is done by braiding inserting the cord as a straight yarn, braided braiding the cord, warpknitting inserting the cord on Raschel machines, knitting or laying the cord, knitting in narrow fabric machines wefting the cord or inserting the cord or both at the same time, and/or flat bed knitting inserting the cord, knitting or laying the cord.

14. Method according to claim 11, comprising an additional step of finishing with silicone, polyurethane, resin, acrylics or any suitable finish.
